# EUROPEAN PATENT APPLICATION

(11) **EP 4 130 201 A1**
(43) Date of publication of application: **08.02.2023**
(21) Application number: 20926973.7
(22) Date of filing: 24.03.2020
(51) Int. Cl.: C10G 2/00, C10L 3/08, C25B 1/00, C25B 1/02

(54) **FUEL PRODUCTION DEVICE**

(71) Applicant: Hitachi, Ltd., Tokyo 100-8280 (JP)
(72) Inventor: UNEMOTO Atsushi, Tokyo 100-8280 (JP); YOSHIKAWA Kohei, Tokyo 100-8280 (JP); SUGIMASA Masatoshi, Tokyo 100-8280 (JP)
(74) Representative: MERH-IP Matias Erny Reichl Hoffmann Patentanwälte PartG mbB
(86) International application number: PCT/JP2020/012889
(87) International publication number: WO 2021/192004

(57) **Abstract**

The present invention provides a fuel production device that is capable of producing fuel from carbon dioxide and water with high conversion efficiency. A fuel production device (100) comprises an electrolysis cell (10) which generates fuel from carbon dioxide and water, wherein the electrolysis cell (10) includes a catalytic electrode (110), a counter electrode (120), and a solid electrolyte layer (130) disposed between the catalytic electrode (110) and the counter electrode (120), the catalytic electrode (110) including a cathode material that reduces carbon dioxide and water to generate carbon monoxide and hydrogen, and a fuel synthesizing catalyst that synthesizes fuel from carbon monoxide and hydrogen, and the counter electrode (120) including an anode material that oxidizes oxide ions to generate oxygen.

## Description

### Technical Field

The present invention relates to a fuel production apparatus that produces a fuel such as a hydrocarbon from carbon dioxide and water using an electrochemical reaction that produces a synthesis gas and a chemical reaction using the synthesis gas as a starting material.

### Background Art

Conventionally, from the viewpoint of preventing global warming, carbon-free energy without carbon dioxide emission is required. Examples of the carbon-free energy include energy generated by natural energy power generation using sunlight, wind power, or the like. The natural energy power generation is spreading worldwide because carbon dioxide is not emitted. However, since the natural energy power generation is affected by climate, weather, and power supply and demand, there is a problem in terms of low facility utilization rate.

As the carbon-free energy, maintenance and development of hydrogen energy are also in progress. Hydrogen is present in a large amount as a compound, and various production methods have been established. Examples of the method of producing hydrogen include reforming of fossil fuel, reforming of biomass, and utilization of byproducts generated in chemical processes. Production in carbon neutral can also be performed by water electrolysis that electrolyzes water.

As a method of water electrolysis, alkali water electrolysis using an alkali aqueous solution as an electrolyte, solid polymer water electrolysis using an ion exchange membrane, solid oxide water electrolysis using a solid oxide, and the like are known. When hydrogen is produced by water electrolysis, surplus power generated by natural energy power generation can also be used. Thus, the hydrogen energy is also expected as a technology for assisting the natural energy power generation with a low facility utilization rate.

However, the hydrogen energy also has problems in terms of low volume storage density, cost for production in carbon neutral, safety and efficiency of storage and transportation, and the like. As a medium that stores hydrogen, various substances such as organic hydride and ammonia have been studied. However, when hydrogen is chemically converted into another compound, conversion efficiency and cost become problems.

Under such circumstances, efforts have also been made to recycle carbon itself. Carbon dioxide discharged into the environment is recovered, stored, and reused to adjust the balance of carbon circulation to a reduction side (carbon negative). As a method of recycling carbon, it has been studied to convert carbon dioxide in exhaust gas discharged from an internal combustion engine or the like into valuable materials such as fuel.

For example, Patent Literature 1 describes a fuel synthesis system using carbon dioxide gas and water vapor as raw materials. This fuel synthesis system includes a synthesis gas generator that produces synthesis gas including hydrogen and carbon monoxide, and a fuel synthesizer that synthesizes fuel from the synthesis gas. The synthesis gas generator includes a solid oxide electrolytic device that electrically reduces carbon dioxide and water vapor.

The synthesis gas is known as a mixed gas containing hydrogen and carbon monoxide as main components. In general, the synthesis gas is used as a raw material for hydrogen gas, alcohols such as methane and methanol, synthetic oil, synthetic fuel, and the like. Solid oxide water electrolysis is also referred to as high-temperature steam electrolysis or the like, and it has been studied to operate at a high temperature of 800 to 1000°C in order to reduce the voltage and overvoltage required for electrolysis.

When a synthesis gas is used as a starting material, a Fischer-Tropsch (FT) reaction represented by the following reaction formula (I), a methane synthesis reaction represented by the following reaction formula (II), a methanol synthesis reaction represented by the following reaction formula (III), or the like is used as a chemical reaction that synthesizes fuel. All the reactions are catalytic reactions, and a Co-based catalyst, an Fe-based catalyst, a Ru-based catalyst, and the like are used for the FT reaction. In the methane synthesis reaction, a Ni-based catalyst and the like are used. In the methanol synthesis reaction, a Cu/ZnO catalyst and the like are used.

nCO + (2n + 1)H₂ → CₙH₂ₙ₊₂ + nH₂O (I)

CO + 3H₂ → CH₄ + H₂O (II)

CO + 2H₂ → CH₃OH (III)

In the fuel synthesis system described in Patent Literature 1, such a chemical reaction that synthesizes fuel is performed in a fuel synthesizer after co-electrolysis of carbon dioxide and water vapor by a solid oxide electrolytic device. A synthesis gas produced by the solid oxide electrolytic device is supplied to the fuel synthesizer through piping. The fuel synthesizer is configured to perform a chemical reaction by a general method such as a fixed bed or a slurry bed.

### Citation List

### Patent Literature

PTL 1: JP 2014-152219 A

### Summary of Invention

### Technical Problem

As represented by the reaction formulas (I) to (III), when carbon dioxide and water are electrically reduced to produce a synthesis gas, and then the synthesis gas is reacted at a predetermined temperature in the presence of a predetermined catalyst, fuels such as methane and hydrocarbon can be obtained. When a yield of an electrochemical reaction that produces a synthesis gas and a yield of a chemical reaction that produces fuel are high, the fuel can be produced in a carbon negative manner.

However, as described in Patent Literature 1, a conventional synthesis process is configured to supply a synthesis gas, produced by co-electrolysis, to a reactor such as a fixed bed or a slurry bed. In both the case of the FT reaction represented by the reaction formula (I) and the case of the methane synthesis reaction represented by the reaction formula (II), the reaction performed in the reactor involves by-production of water.

Since it cannot be said that the conventional reactor has a structure in which water vapor is easily removed, when a large amount of water is produced, there arises a problem that a yield of fuel decreases on a chemical equilibrium. When the yield of fuel decreases, the overall conversion efficiency from carbon dioxide to fuel also decreases. In recycling carbon, there is a possibility that carbon negative is not realized, and a process does not meet energy cost.

Thus, an object of the present invention is to provide a fuel production apparatus capable of producing fuel from carbon dioxide and water with high conversion efficiency. Solution to Problem

In order to solve the above problems, the present invention has the following configurations, for example.
A fuel production apparatus including an electrolytic cell that produces fuel from carbon dioxide and water, in which the electrolytic cell has a catalyst electrode, a counter electrode, and a solid electrolyte layer disposed between the catalyst electrode and the counter electrode, the catalyst electrode includes a cathode material that reduces carbon dioxide and water to produce carbon monoxide and hydrogen, and a fuel synthesis catalyst that synthesizes fuel from carbon monoxide and hydrogen, and the counter electrode includes an anode material that oxidizes oxide ions to produce oxygen.

### Advantageous Effects of Invention

According to the present invention, it is possible to provide a fuel production apparatus capable of producing fuel from carbon dioxide and water with high conversion efficiency.

Problems, configurations, and effects other than those described above will be clarified in the following description of embodiments.

### Brief Description of Drawings

[FIG. 1] FIG. 1 is a diagram schematically illustrating an example of a fuel production apparatus according to an embodiment of the present invention.
[FIG. 2] FIG. 2 is a diagram schematically illustrating an electrolytic cell including a catalyst electrode in the form of a composite electrode.
[FIG. 3] FIG. 3 is a diagram schematically illustrating an electrolytic cell including a catalyst electrode in the form of a single electrode.

### Description of Embodiments

Hereinafter, a fuel production apparatus according to an embodiment of the present invention will be described with reference to the drawings. Note that the same reference numerals are given to common configurations in the following figures, and redundant description is omitted.

A fuel production apparatus according to the present embodiment is an apparatus that produces fuel such as hydrocarbon from carbon dioxide and water. In this fuel production apparatus, carbon dioxide and water are electrically reduced by solid oxide water electrolysis. Carbon monoxide and hydrogen produced by electrical reduction are converted into fuel by a chemical reaction that synthesizes fuel.

Examples of the fuel produced by the fuel production apparatus include methane and hydrocarbons having two or more carbon atoms represented by CₙH₂ₙ₊₂. As the chemical reaction that synthesizes these fuels, an FT reaction represented by a reaction formula (I) or a methane synthesis reaction represented by a reaction formula (II) is used.

In the fuel production apparatus according to the present embodiment, the electrochemical reaction by solid oxide water electrolysis and the chemical reaction that synthesizes fuel are performed in the same electrolytic cell at the same time as a substantially one-step process. In the electrolytic cell, a catalyst electrode in which a catalyst of the chemical reaction that synthesizes fuel is integrated with an electrode is used in order to convert carbon dioxide and water into fuel in a substantially one-step process.

The catalyst electrode includes a cathode material that electrically reduces carbon dioxide and water to produce carbon monoxide and hydrogen, and a fuel synthesis catalyst that synthesizes fuel from carbon monoxide and hydrogen. The cathode material and the fuel synthesis catalyst are integrally provided so that gases and vapors, including synthesis gas, which is an intermediate product, can diffuse and move with each other in order to enable conversion of carbon dioxide and water into fuel in a substantially one-step process.

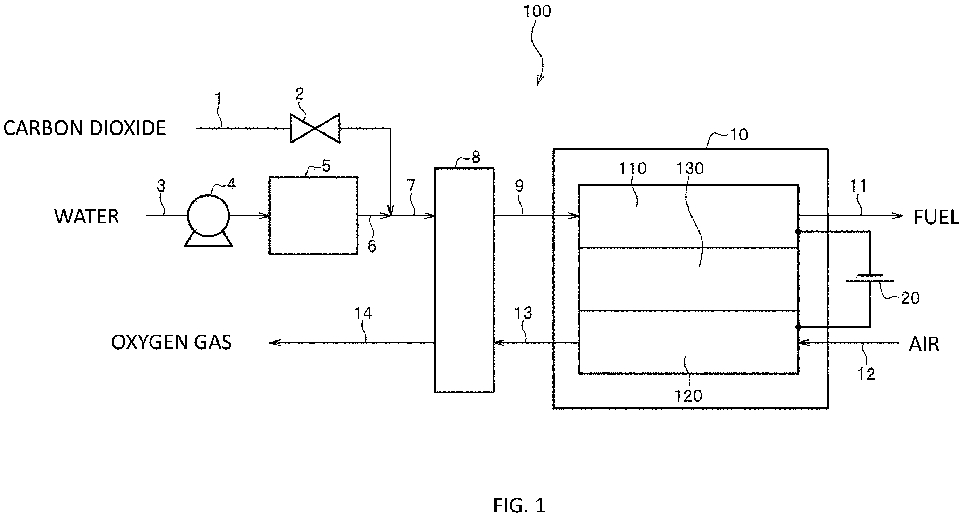

FIG. 1 is a diagram schematically illustrating an example of the fuel production apparatus according to the embodiment of the present invention.

As illustrated in FIG. 1, a fuel production apparatus 100 according to the present embodiment includes a carbon dioxide gas supply pipe 1, a flow rate regulating valve 2, a water supply pipe 3, a water supply pump 4, a steam generator 5, a steam supply pipe 6, a confluent pipe 7, a heat exchanger 8, a mixed gas supply pipe 9, an electrolytic cell 10, a fuel recovery pipe 11, an air intake pipe 12, an oxygen gas discharge pipe 13, and an oxygen gas release pipe 14.

The carbon dioxide gas supply pipe 1 is a pipe for supplying carbon dioxide as a raw material of fuel toward the electrolytic cell 10. The carbon dioxide gas supply pipe 1 is connected to the confluent pipe 7 from a gas tank or the like in which carbon dioxide is provided. The carbon dioxide gas supply pipe 1 can include the flow rate regulating valve 2 for regulating the flow rate of carbon dioxide.

As carbon dioxide as the raw material of the fuel, carbon dioxide separated from exhaust gas can be used from the viewpoint of carbon recycling. Examples of the exhaust gas include gas discharged from a boiler or an internal combustion engine such as a gas engine. The use of an exhaust gas supply source is not particularly limited. For example, exhaust gas generated in a factory, a public facility, a power plant, a chemical plant, a nuclear power plant, or the like can be used.

As a method of separating carbon dioxide from the exhaust gas, various methods such as an adsorption method in which carbon dioxide is reversibly adsorbed to an adsorbent, a chemical absorption method in which carbon dioxide is brought into contact with and absorbed by an alkaline absorbent, and a membrane separation method in which carbon dioxide is separated by a separation membrane can be used. As the adsorption method, any of pressure swing adsorption (PSA), thermal swing adsorption (TSA), and the like can be used.

The water supply pipe 3 is a pipe for supplying water as the raw material of the fuel toward the steam generator 5. The water supply pipe 3 is connected to a water supply port of the steam generator 5. The water supply pipe 3 can be provided with the water supply pump 4 for regulating the flow rate of water. The steam generator 5 is a device that generates water vapor. An amount of water vapor supplied to the electrolytic cell 10 can be adjusted by the water supply pump 4.

As the steam generator 5, various devices such as a waste heat boiler using waste heat of exhaust gas, an oxygen combustion boiler using combustion heat of oxygen, a biomass combustion boiler using combustion heat of biomass, and a general gas combustion boiler can be used. As the steam generator 5, an apparatus using exhaust gas, oxygen generated at the time of separation of carbon dioxide, and fuel produced by the fuel production apparatus 100 is preferable from the viewpoint of improving conversion efficiency from carbon dioxide to fuel and suppressing energy cost.

The steam supply pipe 6 is connected to a steam outlet of the steam generator 5. The steam supply pipe 6 is connected to the confluent pipe 7. The steam supply pipe 6 is a pipe for supplying water vapor as the raw material of the fuel toward the electrolytic cell 10. Carbon dioxide supplied through the carbon dioxide gas supply pipe 1 and water vapor generated by the steam generator 5 are joined at the confluent pipe 7 to become a mixed gas of carbon dioxide and water vapor.

The confluent pipe 7 is connected to a heating side inlet of the heat exchanger 8. The mixed gas supply pipe 9 is connected to a heating side outlet of the heat exchanger 8. The other end of the mixed gas supply pipe 9 is connected to the electrolytic cell 10. The mixed gas supply pipe 9 is a pipe for supplying the mixed gas toward the electrolytic cell 10. In the mixed gas supplied to the electrolytic cell 10, a molar ratio of carbon dioxide to water vapor can be controlled to be smaller than a stoichiometric ratio of the FT reaction or the methane synthesis reaction. This is because water by-produced by a chemical reaction is re-electrolyzed in the same cell in the electrolytic cell 10.

The oxygen gas discharge pipe 13 is connected to a cooling side inlet of the heat exchanger 8. The other end of the oxygen gas discharge pipe 13 is connected to the electrolytic cell 10. The oxygen gas discharge pipe 13 is a pipe for discharging the oxygen gas, produced in the electrolytic cell 10, from the electrolytic cell 10. The oxygen gas release pipe 14 is connected to a cooling side outlet of the heat exchanger 8. The oxygen gas release pipe 14 is a pipe for discharging the oxygen gas, produced in the electrolytic cell 10, to the outside of the fuel production apparatus 100.

The heat exchanger 8 preheats the mixed gas to be supplied to the electrolytic cell 10 by heat exchange with the oxygen gas discharged from the electrolytic cell 10. When the mixed gas is preheated, a voltage required for electrolysis in the electrolytic cell 10 and an overvoltage of the electrolytic cell 10 can be suppressed in a range of a temperature suitable for the chemical reaction that synthesizes fuel.

The electrolytic cell 10 includes, inside a housing, a catalyst electrode 110 functioning as a cathode, an oxygen electrode (counter electrode) 120 functioning as an anode, and a solid electrolyte layer 130 disposed between the catalyst electrode 110 and the oxygen electrode 120. The electrolytic cell 10 is configured as a solid oxide electrolytic cell (SOEC) using a solid oxide as an electrolyte.

In the electrolytic cell 10, co-electrolysis of carbon dioxide and water is performed between the catalyst electrode 110 and the oxygen electrode 120. When a mixed gas of carbon dioxide and water vapor is supplied, the electrolytic cell 10 electrically reduces carbon dioxide and water to produce carbon monoxide and hydrogen. In the catalyst electrode 110, the chemical reaction that synthesizes fuel is performed substantially simultaneously with the co-electrolysis. The electrolytic cell 10 produces hydrocarbon from carbon monoxide and hydrogen produced by electrical reduction in the presence of a fuel synthesis catalyst.

The electrochemical reaction in the catalyst electrode 110 is represented by the following half reaction formulas (IV) and (V).

CO₂ + 2e⁻ → CO + O²⁻ (IV)

H₂O + 2e⁻ → H₂ + O²⁻ (V)

The electrochemical reaction in the oxygen electrode 120 is represented by the following half reaction formula (VI).

2O²⁻ → O₂ + 4e⁻ (VI)

The chemical reaction that synthesizes fuel in the catalyst electrode 110 is the FT reaction (nCO + (2n + 1)H₂ → CₙH₂ₙ₊₂ + nH₂O) represented by the reaction formula (I) when hydrocarbon is synthesized as fuel. When methane is synthesized as fuel, the chemical reaction is the methane synthesis reaction (CO + 3H₂ → CH₄ + H₂O) represented by the reaction formula (II).

As illustrated in FIG. 1, the electrolytic cell 10 is electrically connected to an external power supply 20. The external power supply 20 is a power supply that supplies a current necessary for electrolysis to the electrolytic cell 10. A positive electrode of the external power supply 20 is electrically connected to the oxygen electrode 120 of the electrolytic cell 10. A negative electrode of the external power supply 20 is electrically connected to the catalyst electrode 110 of the electrolytic cell 10.

The electrolytic cell 10 is provided with a gas inlet through which a mixed gas of carbon dioxide and water vapor is introduced toward the catalyst electrode 110, a fuel outlet through which a fuel produced through an electrochemical reaction and a chemical reaction is discharged from the catalyst electrode 110, an oxygen outlet through which oxygen produced by the electrochemical reaction is discharged from the oxygen electrode 120, and a suction port through which air is sucked toward the oxygen electrode 120.

The mixed gas supply pipe 9 is connected to the gas inlet of the electrolytic cell 10. The fuel recovery pipe 11 is connected to the fuel outlet of the electrolytic cell 10. The fuel recovery pipe 11 is a pipe for discharging the fuel, produced in the electrolytic cell 10, from the electrolytic cell 10 and recovering the fuel. The fuel discharged from the electrolytic cell 10 is used after being subjected to a purification treatment or the like.

The oxygen gas discharge pipe 13 is connected to the oxygen outlet of the electrolytic cell 10. The air intake pipe 12 is connected to the suction port of the electrolytic cell 10. The air intake pipe 12 is a pipe through which air is sucked to the side of the oxygen electrode 120 of the electrolytic cell 10 from the outside or the like of the fuel production apparatus 100. Temperature regulated air or the like is sucked into the anode side on which the oxygen electrode 120 is disposed in order to maintain the temperature and the pressure in accordance with discharge of the oxygen gas produced by the electrochemical reaction.

The other end of the oxygen gas release pipe 14 may be opened to the outside of the fuel production apparatus 100 or may be connected to the air intake pipe 12 so as to form a circulation path. When such a circulation path is formed, the oxygen gas produced in the electrolytic cell 10 can be supplied again to the electrolytic cell 10 and circulated. The temperature and pressure on the anode side on which the oxygen electrode 120 is disposed can be maintained while suppressing energy cost.

In FIG. 1, the electrolytic cell 10 is constituted by a single cell. However, the electrolytic cell 10 may be constituted by a plurality of cells stacked in series. When the electrolytic cell 10 is configured as a stack of a plurality of cells, the individual cells are stacked via an interconnector. A manifold or the like can be connected to the gas inlet or the like of the electrolytic cell for distribution of a mixed gas toward the individual cells.

The shape of the electrolytic cell 10 may be any shape such as a flat plate shape, a cylindrical shape, a cylindrical flat plate shape, a flat cylindrical shape, or a columnar shape. When the electrolytic cell 10 is configured as the stack of the plurality of cells, the shape may be a vertical stripe shape in which the individual cells are connected to each other via side surfaces, or may be a horizontal stripe shape in which the individual cells are connected to each other via upper and lower surfaces.

The electrolytic cell 10 may have any of a structure in which other components are supported by the oxygen electrode 120, a structure in which components on both electrode sides are supported by the solid electrolyte layer 130, and a structure in which cell components are supported by a porous support. However, from the viewpoint of lowering operating temperature of the electrolytic cell 10 to achieve both the electrochemical reaction and the chemical reaction, it is preferable to provide the solid electrolyte layer 130 thinly. Thus, a structure supported by the oxygen electrode 120 and a porous support is preferable.

Inside the housing of the electrolytic cell 10, a cathode side gas flow path communicating from the mixed gas supply pipe 9 to the fuel recovery pipe 11 and an anode side gas flow path communicating from the air intake pipe 12 to the oxygen gas discharge pipe 13 are provided. The cathode side gas flow path and the anode side gas flow path are separated from each other by a structure that blocks the flow of gas so that gases flowing through the respective flow paths do not mix.

The cathode side gas flow path serves as a flow path of carbon dioxide and water vapor supplied from the mixed gas supply pipe 9, and carbon monoxide and hydrogen produced in the catalyst electrode 110 by the electrochemical reaction. The catalyst electrode 110 is provided so as to be in contact with the cathode side gas flow path. For example, in the case of a flat plate-shaped cell, the cathode side gas flow path can be provided in the catalyst electrode 110, the interconnector in contact with the catalyst electrode 110, or the like. In the case of a cylindrical cell, the inside of a cylindrical body having the catalyst electrode 110 on its inner peripheral surface can be used as the cathode side gas flow path.

The anode side gas flow path serves as a flow path of air taken in from the air intake pipe 12 and oxygen gas produced in the oxygen electrode 120 by the electrochemical reaction. The oxygen electrode 120 is provided so as to be in contact with the anode side gas flow path. For example, in the case of a flat plate-shaped cell, the anode side gas flow path can be provided in the oxygen electrode 120, the interconnector in contact with the oxygen electrode 120, or the like. In the case of a cylindrical cell, the outside of a cylindrical body having the oxygen electrode 120 on its outer peripheral surface can be used as the anode side gas flow path.

The operating temperature of the electrolytic cell 10 is preferably 800°C or lower, more preferably 700°C or lower, and still more preferably 600°C or lower. With such an operating temperature, it is possible to suppress deterioration of the electrode due to thermal deformation, sintering, or coking. It is suppressed that an electrode material is aggregated and sintered or a high-resistance layer is formed at a ZrO₂-based interface or the like at a high temperature. Thus, a range of selection of a material constituting the electrolytic cell 10 is widened.

A typical SOEC is operated at a high temperature of 800°C to 1000°C in order to reduce the voltage and overvoltage required for electrolysis. On the other hand, since general FT reaction and methane synthesis reaction are exothermic reactions, the reaction is performed at about 300°C to 400°C under several tens of atmospheres.

On the other hand, in the electrolytic cell 10, the operating temperature can be designed to be lower than that in a conventional SOEC according to a yield of the fuel and the like so as to be closer toward the chemical reaction that synthesizes fuel. As a method of lowering the operating temperature, for example, a method of providing the solid electrolyte layer 130 thin, or a method of lowering conductive resistance of the electrode by suitable selection of the electrode material or micronization can be used.

The FT reaction represented by the reaction formula (I) and the methane synthesis reaction represented by the reaction formula (II)are the reactions involving by-production of water. In order to improve the yield of these reactions, it is important to perform efficient moisture removal. As the prior art, when a synthesis gas produced by co-electrolysis is supplied to a reactor such as a fixed bed or a slurry bed to synthesize fuel, a measure for removing moisture is required on the reactor. However, the measure on the reactor often involves special design, addition of a process, and the like. Thus, it can be said that it is disadvantageous in terms of the overall conversion efficiency from carbon dioxide to fuel and energy cost.

On the other hand, according to the fuel production apparatus 100, since the electrical reduction of carbon dioxide and water and the chemical reaction that synthesizes fuel are performed in a substantially one-step process inside the electrolytic cell 10, it is possible to electrically reduce and consume water by-produced by the chemical reaction that synthesizes fuel. Since a chemical reaction that produces water as a by-product while producing fuel and co-electrolysis of carbon dioxide and water are performed substantially at the same time in the same electrolytic cell 10, it is possible to improve the yield of the fuel, improve carbon conversion efficiency, and suppress the energy cost. Thus, fuel can be produced from carbon dioxide and water with high conversion efficiency.

As the catalyst electrode 110 provided in the fuel production apparatus 100 thus configured, either a composite electrode in which a fuel electrode (cathode) formed of a cathode material and a catalyst layer formed of a fuel synthesis catalyst are stacked or a single electrode (cathode) formed of a mixture of the cathode material and the fuel synthesis catalyst can be used.

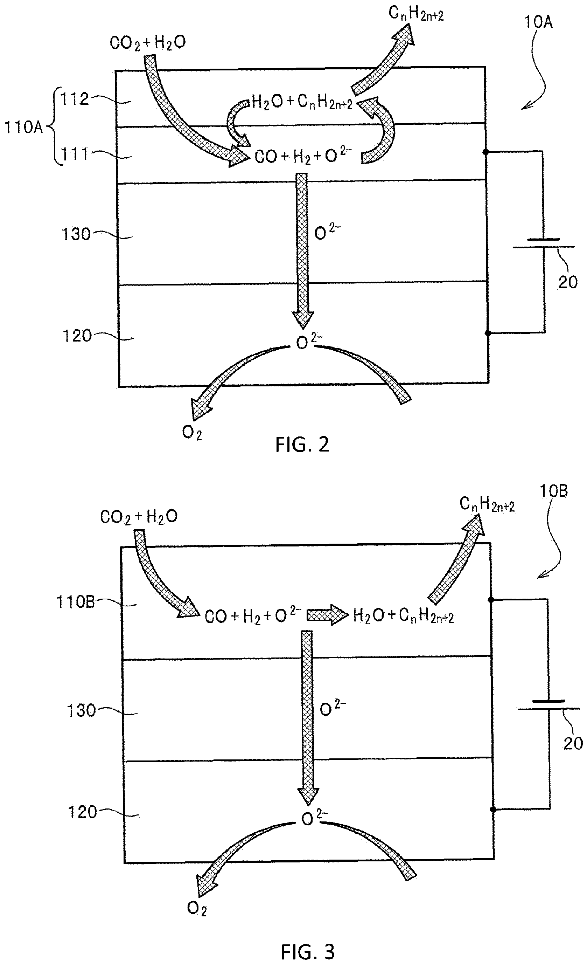

FIG. 2 is a diagram schematically illustrating an electrolytic cell including a catalyst electrode in the form of a composite electrode.
As illustrated in FIG. 2, as the electrolytic cell 10 of the fuel production apparatus 100, an electrolytic cell 10A including a catalyst electrode 110A in the form of a composite electrode in which a fuel electrode (cathode) 111 formed of the cathode material and the catalyst layer 112 formed of the fuel synthesis catalyst are stacked can be used.

In the catalyst electrode 110A in the form of a composite electrode, a fuel electrode 111 is in contact with the solid electrolyte layer 130. The negative electrode of the external power supply 20 is electrically connected to the fuel electrode 111. According to such arrangement and connection, the voltage required for electrolysis can be reduced depending on the material of the catalyst electrode 110A. However, the configuration of the electrolytic cell 10A is not limited to such arrangement and connection.

The fuel electrode (cathode) 111 is an electrode to which the fuel of the electrolytic cell 10A (carbon dioxide and water which are raw materials of the fuel produced by the fuel production apparatus 100) is supplied, and produces carbon monoxide and hydrogen by electrically reducing carbon dioxide and water.

The fuel electrode 111 is formed of a material having reactant adsorbability to a mixed gas component and electron conductivity. The fuel electrode 111 is porous to have gas diffusibility. The fuel electrode 111 may be formed of a material having ionic conductivity of oxide ions, or may be formed by mixing a solid electrolyte having ionic conductivity of oxide ions.

Examples of the material of the fuel electrode 111 include transition metal elements such as V, Cr, Mn, Fe, Co, Ni, Cu, and Ru, group 10 elements such as Pd and Pt, group 11 elements such as Au, and alloys thereof. As the material of the fuel electrode 111, one kind or a plurality of kinds of materials may be used.

As the material of the fuel electrode 111, a cermet obtained by mixing and sintering a metal powder, transition metal, and an oxide of transition metal with an oxide such as stabilized zirconia, stabilized ceria, or lanthanum gallate can be used. The cermet is preferably a cermet doped with a group 3 element or a rare earth element such as Y, Sc, Sm, or Gd, or an alkaline earth metal element such as Mg, Ca, or Sr.

The cermet may contain one kind or a plurality of kinds of rare earth elements. One kind or a plurality of kinds of the transition metal elements and one kind or a plurality of kinds of the alkaline earth metal elements may also be contained. A mixing ratio of the transition metal and the oxide of the transition metal is not particularly limited, and can be, for example, 40 to 60% by mass per 100% by mass of the cermet.

Specific examples of the material of the fuel electrode 111 include nickel powder, platinum powder, powder of an alloy thereof, nickel oxide-yttria stabilized zirconia cermet, nickel oxide-scandia stabilized zirconia cermet, nickel-yttria stabilized zirconia cermet, nickel-samaria stabilized ceria cermet, and nickel-gadolinia stabilized ceria cermet.

The catalyst layer 112 converts carbon monoxide and hydrogen, produced by electrical reduction, into fuel by the chemical reaction that synthesizes fuel. The catalyst layer 112 includes a fuel synthesis catalyst that catalyzes the chemical reaction that synthesizes fuel. The catalyst layer 112 may contain a carrier, a promoter, a binder, and the like together with an active component of the catalyst.

As the fuel synthesis catalyst, when hydrocarbon is synthesized as fuel, a catalyst of the FT reaction represented by the reaction formula (I) is used. When methane is synthesized as fuel, a catalyst of the methane synthesis reaction represented by the reaction formula (II) is used.

The catalyst layer 112 is porous to have gas diffusibility. The catalyst layer 112 is preferably formed of a material having electron conductivity from the viewpoint of reducing conduction through the interconnector and current collection resistance. The shape of the fuel synthesis catalyst used for the catalyst layer 112 may be any of a particulate shape, a flaky shape, a plate shape, and the like.

As the material of the catalyst layer 112, metal such as Fe, Co, Ni, or Ru, or oxide containing these metals can be used as the active component of the catalyst of the FT reaction. As the active component of the catalyst for the methane synthesis reaction, metal such as Fe, Co, Ni, Ru, or Mo, or oxide containing these metals can be used. The active component of the catalyst may be a Raney catalyst. The active component of the catalyst may contain one kind or a plurality of kinds of metals

Examples of the carrier include oxides such as zirconia, ceria, alumina, lanthanum aluminate, magnesia, silica, titania, and chromia, carbon black, and activated carbon. As the carrier, a substance that hardly reacts with other materials during heat treatment is preferable. Examples of such a carrier include zirconia, ceria, alumina, lanthanum aluminate, and magnesia. Examples of the promoter include thorium, lanthanum, manganese, and ruthenium. As the material of the catalyst layer 112, one kind or a plurality of kinds of materials may be used.

An oxide of the active component can be prepared by a method in which a precursor of the active component is fired under an oxygen atmosphere. Metal of the active component can be prepared by a method in which the precursor of the active component is fired under an oxygen atmosphere and then heat-treated under a reducing atmosphere. As a method of preparing the catalyst, various methods such as an impregnation method, a coprecipitation method, a kneading method, a mechanical alloying method, and a vapor deposition method can be used.

The oxygen electrode (anode) 120 is a counter electrode of the fuel electrode 111, and oxidizes oxide ions (O²⁻) to produce oxygen (O₂).

The oxygen electrode 120 is formed of an anode material having electron conductivity. The oxygen electrode 120 is porous to have gas diffusibility. The oxygen electrode 120 may be formed of a material having ionic conductivity of oxide ions, or may be formed by mixing a solid electrolyte having ionic conductivity of oxide ions.

Examples of the material of the oxygen electrode 120 include group 3 elements or rare earth elements such as Y, Sc, La, Ce, Sm, Gd, Er, and Yb, transition metals such as Mn, Fe, Co, Ni, and Cu, alkaline earth metal elements such as Mg, Ca, Sr, and Ba, group 11 elements such as Ag, and alloys thereof. As the material of the oxygen electrode 120, one kind or a plurality of kinds of materials may be used.

Specific examples of the material of the oxygen electrode 120 include a perovskite-type oxide containing a rare earth element and a transition metal element. The perovskite-type oxide is preferably an oxide doped with a group 3 element or a rare earth element such as La or Sm, or an alkaline earth metal element such as Mg, Ca, Sr, or Ba.

The perovskite-type oxide may contain one kind or a plurality of kinds of rare earth elements. One kind or a plurality of kinds of the transition metal elements and one kind or a plurality of kinds of the alkaline earth metal elements may also be contained.

Specific examples of the material of the oxygen electrode 120 include La₁₋ₓSrₓMnO₃ (0 < x < 1), La_{1-y}Sr_{y}CoO₃ (0 < y < 1), La_{1-z}Sr_{z}FeO₃ (0 < z < 1), La₁₋ₐSrₐFe_{1-b}Co_{b}O₃ (0 < a < 1, 0 ≤ b ≤ 1), Sm_{1-c}Sr_{c}CoO₃ (0 < c < 1), and SmMn_{1-d}Co_{d}O₃ (0 < d < 1).

The solid electrolyte layer 130 mediates conduction of oxide ions (O²⁻) between the catalyst electrode 110A and the oxygen electrode 120, and also functions as a separator that prevents conduction of electrons and diffusion movement of gas.

The solid electrolyte layer 130 is formed of an ion conductor having ionic conductivity of oxide ions and low electron conductivity. The solid electrolyte layer 130 has a dense structure to block gas diffusion.

Examples of the material of the solid electrolyte layer 130 include group 3 elements or rare earth elements such as Y, Sc, La, Ce, Sm, Gd, Er, and Yb, transition metals such as Mn, Fe, Co, Ni, and Cu, alkaline earth metal elements such as Mg, Ca, Sr, and Ba, group 4 elements such as Ti and Zr, and group 13 elements such as Al, Ga, and In. As the material of the solid electrolyte layer 130, one kind or a plurality of kinds of materials may be used.

As the material of the solid electrolyte layer 130, an oxygen deficient oxide having a fluorite type crystal structure can be used. Examples of such an oxide include stabilized zirconia, stabilized ceria, and lanthanum gallate. As the stabilized zirconia and the stabilized ceria, preferred is an oxide doped with a group 3 element or a rare earth element such as Y, Sc, Sm, Gd, Er, or Yb, or an alkaline earth metal element such as Mg, Ca, or Sr. The lanthanum gallate is preferably an oxide doped with an alkaline earth metal element such as Mg, Ca, Sr, or Ba, or a transition metal element such as Co or Ni.

Specific examples of the material of the solid electrolyte layer 130 include yttria stabilized zirconia, scandia stabilized zirconia, samaria stabilized ceria, gadolinia stabilized ceria, and La₁₋ₚSrₚGa_{1-q}Mg_{q}O₃ (0 < p < 1, 0 < q < 1).

A current collector may be attached to the catalyst electrode 110 and the oxygen electrode 120. Examples of the material of the current collector include Ni, Pt, Ag, Au, stainless steel, and lanthanum chromite. The shape of the current collector can be an appropriate shape such as a tab shape, a grid shape, a mesh shape, or a felt shape.

When the electrolytic cell 10A is configured as a stack of a plurality of cells, the interconnector is formed of a material having electron conductivity but not having ion conductivity or gas diffusibility. The interconnector has a dense structure to block gas diffusion.

As a material of the interconnector, various materials such as Pt, Ag, Au, soda lime glass, silica glass, aluminoborosilicate glass, borate glass, (La, Sr) MnO₃, (La, Sr) CoOs, and (Sm, Sr) CoOs can be used.

In the catalyst electrode 110A in the form of a composite electrode illustrated in FIG. 2, the catalyst layer 112 is preferably disposed so as to be in contact with the cathode side gas flow path. The fuel electrode 111 and the catalyst layer 112 constituting the catalyst electrode 110A are porous with gas diffusibility. Thus, the mixed gas of carbon dioxide and water vapor supplied from the outside of the electrolytic cell 10A can diffuse and move to the fuel electrode 111 through the catalyst layer 112.

When an electrolytic voltage is applied from the external power supply 20 while the mixed gas is supplied to the electrolytic cell 10A, electrons are injected from the external power supply 20 into the fuel electrode 111, and co-electrolysis of carbon dioxide and water is performed. In the fuel electrode 111, carbon dioxide (CO₂) and water (H₂O) are electrically reduced to produce carbon monoxide (CO), hydrogen (H₂), and oxide ions (O²⁻).

The oxide ions (O²⁻) produced in the fuel electrode 111 conduct through the solid electrolyte layer 130 and move to the oxygen electrode 120. In the oxygen electrode 120, oxide ions (O²⁻) are electrically oxidized to produce oxygen gas (O₂). The oxygen gas (O₂) produced in the oxygen electrode 120 is discharged to the outside of the electrolytic cell 10A through the anode side gas flow path along with suction of temperature regulated air or the like.

On the other hand, carbon monoxide (CO) and hydrogen (H₂) produced in the fuel electrode 111 can diffuse and move from the fuel electrode 111 to the catalyst layer 112 because the fuel electrode 111 and the catalyst layer 112 are porous with gas diffusibility. In the catalyst layer 112, in carbon monoxide (CO) and hydrogen (H₂), the chemical reaction is catalyzed in the presence of the fuel synthesis catalyst to produce hydrocarbon (CₙH₂ₙ₊₂) and water (H₂O).

Hydrocarbon (CₙH₂ₙ₊₂) produced in the catalyst layer 112 is discharged to the outside of the electrolytic cell 10A and recovered. On the other hand, since water (H₂O) produced in the catalyst layer 112 becomes water vapor, the water can diffuse and move from the catalyst layer 112 to the fuel electrode 111. Thus, a part of the produced water vapor is co-electrolyzed together with carbon dioxide (CO₂) in the fuel electrode 111.

According to the electrolytic cell 10A including the catalyst electrode 110A in the form of such a composite electrode, the voltage and overvoltage necessary for electrolysis can be reduced mainly based on the design of a fuel electrode 1111. Since requirement for electrochemical characteristics of the fuel synthesis catalyst included in the catalyst layer 112 is reduced, the range of selection of the material constituting the electrolytic cell is widened.

FIG. 3 is a diagram schematically illustrating an electrolytic cell including a catalyst electrode in the form of a single electrode.
As illustrated in FIG. 3, as the electrolytic cell 10 of the fuel production apparatus 100, an electrolytic cell 10B including a catalyst electrode 110B in the form of a single electrode formed of a mixture of a cathode material and a fuel synthesis catalyst can be used.

The catalyst electrode 110B in the form of a single electrode electrically reduces carbon dioxide and water to produce carbon monoxide and hydrogen. In the same electrode, carbon monoxide and hydrogen produced by electrical reduction are converted into fuel by the chemical reaction that synthesizes fuel. The catalyst electrode 110B includes a fuel synthesis catalyst that catalyzes the chemical reaction that synthesizes fuel.

As the fuel synthesis catalyst, when hydrocarbon is synthesized as fuel, a catalyst of the FT reaction represented by the reaction formula (I) is used. When methane is synthesized as fuel, a catalyst of the methane synthesis reaction represented by the reaction formula (II) is used.

The catalyst electrode 110B in the form of a single electrode is formed of a mixture of a cathode material having reactant adsorbability and electron conductivity for a mixed gas component and a fuel synthesis catalyst, and a material having reactant adsorbability, electron conductivity, and fuel synthesis catalytic activity. The catalyst electrode 110B is porous to have gas diffusibility. The catalyst electrode 110B may be formed by mixing a solid electrolyte having ion conductivity of oxide ions.

As the material of the catalyst electrode 110B in the form of a single electrode, the material of the fuel electrode 111 in the form of a composite electrode can be used as a cathode material. The material of the catalyst layer 112 in the form of a composite electrode can be used as a material of a fuel synthesis catalyst.

The catalyst electrode 110B can be formed by a method of mixing the material of the fuel electrode 111 and the material of the catalyst layer 112, and a method of using a predetermined material having reactant adsorbability, electron conductivity, and fuel synthesis catalytic activity alone. As the material of the catalyst electrode 110B, one kind or a plurality of kinds of materials may be used.

In the electrolytic cell 10B including the catalyst electrode 110B in the form of a single electrode, as the material of the oxygen electrode 120 and the solid electrolyte layer 130, the same material as the material of the oxygen electrode 120 in the form of a composite electrode or the material of the solid electrolyte layer 130 in the form of a composite electrode can be used. As a material of the current collector or the interconnector, a material similar to the form of the composite electrode can be used.

The catalyst electrode 110B in the form of a single electrode may have a structure in which the cathode material and the fuel synthesis catalyst are dispersed in the electrode with high uniformity, or may have a structure in which a concentration gradient is formed in the electrode. Examples of the concentration gradient of the cathode material and the fuel synthesis catalyst include a structure in which a mixing ratio of the cathode material on the solid electrolyte layer 130 side is higher than that on the opposite side.

In the catalyst electrode 110B in the form of a single electrode illustrated in FIG. 3, the catalyst electrode 110B is porous with gas diffusibility. Thus, the mixed gas of carbon dioxide and water vapor supplied from the outside of the electrolytic cell 10B can diffuse and move toward the cathode material and the fuel synthesis catalyst in the catalyst electrode 110B.

When the electrolytic voltage is applied from the external power supply 20 while the mixed gas is supplied to the electrolytic cell 10B, electrons are injected from the external power supply 20 into the catalyst electrode 110B, and co-electrolysis of carbon dioxide and water is performed. In the catalyst electrode 110B, carbon dioxide (CO₂) and water (H₂O) are electrically reduced to produce carbon monoxide (CO), hydrogen (H₂), and oxide ions (O²⁻).

The oxide ions (O²⁻) produced in the catalyst electrode 110B conduct through the solid electrolyte layer 130 and move to the oxygen electrode 120. In the oxygen electrode 120, oxide ions (O²⁻) are electrically oxidized to produce oxygen gas (O₂). The oxygen gas (O₂) produced in the oxygen electrode 120 is discharged to the outside of the electrolytic cell 10B through the anode side gas flow path along with suction of temperature regulated air or the like.

On the other hand, carbon monoxide (CO) and hydrogen (H₂) produced in the catalyst electrode 110B can diffuse and move from the cathode material in the catalyst electrode 110B to the fuel synthesis catalyst because the catalyst electrode 110B is porous with gas diffusibility. In the catalyst electrode 110B, in carbon monoxide (CO) and hydrogen (H₂), the chemical reaction is catalyzed in the presence of the fuel synthesis catalyst to produce hydrocarbon (CₙH₂ₙ₊₂) and water (H₂O).

Hydrocarbon (CₙH₂ₙ₊₂) produced in the catalyst electrode 110B is discharged to the outside of the electrolytic cell 10B and recovered. On the other hand, since water (H₂O) produced in the catalyst electrode 110B becomes water vapor, the water can diffuse and move from the fuel synthesis catalyst to the cathode material. Thus, a part of the produced water vapor is co-electrolyzed together with carbon dioxide (CO₂) in the catalyst electrode 110B.

According to the electrolytic cell 10B including the catalyst electrode 110B in the form of such a single electrode, a diffusion migration distance of a reactant can be reduced between the cathode and the fuel synthesis catalyst. Water by-produced by the chemical reaction that synthesizes fuel can be quickly consumed by electrical reduction in the same electrode. Thus, if the conductive resistance of the catalyst electrode 110B can be reduced, it is advantageous in that the yield of fuel is improved.

Next, a method of producing the catalyst electrode 110A in the form of a composite electrode and the catalyst electrode 11B in the form of a single electrode will be described.

The catalyst electrode 110A in the form of a composite electrode and the catalyst electrode 11B in the form of a single electrode may be prepared in a state of being integrated with the solid electrolyte layer 130, or may be prepared as a separate body from the solid electrolyte layer 130, and then stacked and sintered. The catalyst electrode 110A in the form of a composite electrode may be prepared in a state where the fuel electrode 111 and the catalyst layer 112 are integrated, or may be stacked and sintered after the fuel electrode 111 and the catalyst layer 112 are prepared as separate bodies.

The catalyst electrode 110A in the form of a composite electrode and the catalyst electrode 11B in the form of a single electrode can be prepared by either a wet method or a dry method depending on the material. Examples of the wet method include a coating method, a dip coating method, and a spray deposition method. Examples of the dry method include a vapor deposition method, a sputtering method, an ion plating method, and a plasma CVD (chemical vapor deposition) method.

For example, the cathode material or the material of the fuel synthesis catalyst is pulverized and mixed by adding a binder or a solvent to obtain an ink material. A conductive agent and a pore forming material such as a carbon material can be added to the cathode material or the material of the fuel synthesis catalyst as necessary. Examples of the conductive agent include carbon black such as furnace black, channel black, acetylene black, and thermal black, activated carbon, and carbon fiber.

As the solvent, water, an alcohol such as methanol, ethanol, propanol, ethylene glycol, propylene glycol, or terpene alcohol, or an appropriate solvent such as N-methyl-2-pyrrolidone can be used. As the binder, an appropriate binder such as a cellulose-based binder such as ethyl cellulose, an acrylic binder, a vinyl alcohol resin, or a vinyl butyral resin can be used.

Subsequently, the ink material obtained by pulverization and mixing is attached onto a base material by an applicator such as a doctor blade, a die coater, screen printing, application with a roll coater or the like, dipping, spraying by a spray, or the like. As the base material, other cell components molded in advance, carbon paper, carbon cloth, or the like can be used Alternatively, the ink material may be dried and then press-molded.

Subsequently, the cathode material and the material of the fuel synthesis catalyst are subjected to heat treatment for drying and firing. As a method of stacking the cell components, a method of performing heat treatment and sintering can be used. If the temperature of the heat treatment is too low, sintering becomes insufficient; however, if the temperature of the heat treatment is too high, sintering occurs. For this reason, heat treatment at a suitable temperature is required for firing the cathode material and the material of the fuel synthesis catalyst and sintering at the time of stacking the cell components.

The temperature of the heat treatment for forming the fuel electrode 111 may be, for example, 900 to 1500°C although it depends on the material. The temperature of the heat treatment for forming the catalyst layer 112 may be, for example, 400 to 1200°C. The temperature of the heat treatment for forming the catalyst electrode 11B in the form of a single electrode is preferably 1200°C or lower.

The heat treatment for forming the fuel electrode 111 and the heat treatment for forming the catalyst layer 112 may be a one-step heat treatment or such a multi-step heat treatment that includes temporary firing and main firing. The temperature of the heat treatment is not particularly limited, and may be, for example, 1 to 24 hours. The atmosphere of the heat treatment may be an oxidizing atmosphere such as an air atmosphere or an oxygen gas atmosphere.

A fired product subjected to the heat treatment is subjected to secondary processing by laser processing or the like as necessary, whereby the catalyst electrode 110A in the form of a composite electrode and the catalyst electrode 11B in the form of a single electrode can be obtained. When the catalyst electrode 110A in the form of a composite electrode and the catalyst electrode 11B in the form of a single electrode are prepared in a state of being integrated with the solid electrolyte layer 130, the same method as above can be used.

Although the embodiment of the present invention has been described above, the present invention is not limited to the above-described embodiment, and various modifications can be made without departing from the gist of the present invention. For example, the present invention is not necessarily limited to those having all the configurations included in the above-described embodiment. Apart of the configuration of a certain embodiment can be replaced with another configuration, a part of the configuration of a certain embodiment can be added to another embodiment, or a part of the configuration of a certain embodiment can be omitted.

For example, the fuel production apparatus 100 includes the flow rate regulating valve 2, the water supply pump 4, the heat exchanger 8, and the like. However, the configuration of the fuel production apparatus excluding the electrolytic cell 10 is not particularly limited. The carbon dioxide gas supply pipe 1 may include a blower, a compressor, and the like capable of regulating the flow rate of carbon dioxide gas. The water supply pipe 3 may include a flow rate regulating valve or the like. An auxiliary heat source for heating the mixed gas may be installed in the heat exchanger 8 or may be installed instead of the heat exchanger 8.

The fuel production apparatus 100 includes the mixed gas supply pipe 9, the fuel recovery pipe 11, the air intake pipe 12, the oxygen gas discharge pipe 13, and the oxygen gas release pipe 14. However, the configuration of piping of the fuel production apparatus is not particularly limited. The connection of the pipes can be changed or added without departing from the gist of the present invention.

In the fuel production apparatus 100, methane or a hydrocarbon having 2 or more carbon atoms is produced. However, methanol, dimethyl ether, or the like may be produced using such a fuel production apparatus.

### Reference Signs List

1 carbon dioxide gas supply pipe
2 flow rate regulating valve
3 water supply pipe
4 water supply pump
5 steam generator
6 steam supply pipe
7 confluent pipe
8 heat exchanger
9 mixed gas supply pipe
10 electrolytic cell
11 fuel recovery pipe
12 air intake pipe
13 oxygen gas discharge pipe
14 oxygen gas release pipe
100 fuel production apparatus
110 catalyst electrode
111 fuel electrode (cathode)
112 catalyst layer
120 oxygen electrode (anode, counter electrode)
130 solid electrolyte layer

## Claims

1. A fuel production apparatus comprising an electrolytic cell that produces fuel from carbon dioxide and water,
wherein the electrolytic cell has a catalyst electrode, a counter electrode, and a solid electrolyte layer disposed between the catalyst electrode and the counter electrode,
the catalyst electrode includes a cathode material that reduces carbon dioxide and water to produce carbon monoxide and hydrogen, and a fuel synthesis catalyst that synthesizes fuel from carbon monoxide and hydrogen, and
the counter electrode includes an anode material that oxidizes oxide ions to produce oxygen.

2. The fuel production apparatus according to claim 1, wherein the catalyst electrode is an electrode in which a cathode formed of the cathode material and a catalyst layer formed of the fuel synthesis catalyst are integrated.

3. The fuel production apparatus according to claim 1, wherein the catalyst electrode is an electrode formed of a mixture of the cathode material and the fuel synthesis catalyst.

4. The fuel production apparatus according to claim 1, wherein in the catalyst electrode, a reaction that reduces the carbon dioxide and the water and a reaction that produces the fuel from the carbon monoxide and the hydrogen are performed at the same time in the electrolytic cell.

5. The fuel production apparatus according to claim 1, wherein a reaction catalyzed by the fuel synthesis catalyst is a Fischer-Tropsch reaction, and
hydrocarbon is produced as the fuel.

6. The fuel production apparatus according to claim 1, wherein a reaction catalyzed by the fuel synthesis catalyst is a methane synthesis reaction, and
methane is produced as the fuel.
